# EUROPEAN PATENT SPECIFICATION

(11) **EP 3 769 716 B1**
(45) Date of publication and mention of the grant of the patent: **16.03.2022**
(21) Application number: 20186042.6
(22) Date of filing: 15.07.2020
(51) Int. Cl.: A61C 9/00, A61C 13/15

(54) **A DEVICE FOR ACCELERATING THE HARDENING OF MATERIAL SUITABLE FOR COPYING THE SHAPE OF TEETH AND MUCOUS MEMBRANES**
VORRICHTUNG ZUR BESCHLEUNIGUNG DER AUSHÄRTUNG VON MATERIAL ZUM KOPIEREN DER FORM VON ZÄHNEN UND SCHLEIMHÄUTEN
DISPOSITIF POUR ACCÉLÉRER LE DURCISSEMENT DE MATÉRIAU APPROPRIÉ POUR COPIER LA FORME DES DENTS ET DES MEMBRANES MUQUEUSES

(30) Priority: 25.07.2019 IT 201900012885
(43) Date of publication of application: 27.01.2021
(73) Proprietor: De Luca, Marco, 34127 Trieste (IT)
(72) Inventor: De Luca, Marco, 34127 Trieste (IT)
(74) Representative: Lunati & Mazzoni S.r.L.

(56) References cited:
- US-A- 1 084 017
- US-A- 5 702 250
- US-A1- 2001 038 993
- US-A1- 2004 096 800
- US-A1- 2007 054 233

## Description

The invention relates to a device for accelerating the hardening of material suitable for copying the shape of teeth and mucous membranes, in particular impression material for dental use to be placed in impression trays, of the type specified in the preamble to the first claim.

Document US2007/054233 discloses a dental device which may be used for whitening teeth by exposing teeth to electromagnetic radiation and includes a carrier and at least one source of electromagnetic radiation.

As is well known, with particular reference to dental practices, impressions of teeth or gums or the palate of the mouth are often taken.

These are taken in order to create a copy of the patient's mouth, so as to be able to carry out local operations with precision at a later date.

In order to obtain these impressions, specially shaped impression trays are used that are anatomically shaped and able to house an impression material in special cavities.

For example, in many cases said trays are basically rigid and shaped like horseshoes, with channels selectively adapted to the lower dental arch or to the upper dental arch.

Typically the channels have at least one bottom, either continuous or perforated, to reduce the formation of air bubbles in the impression material and also to avoid closed bottom areas that can lead to different local hardening of the material.

The impression material has initially, as soon as it is formed or made available, a plastic consistency that resembles a more or less viscous cream.

The material is inserted into the channels of the impression tray and the trays and the impression material are placed in the mouth and pressed so that teeth and/or mucous membranes penetrate the impression material.

The latter gradually hardens and permanently stores a negative model of the shape of the teeth and/or gums and/or palate with which it has been in contact. The positive model is obtained later by pouring plaster or resin into the negative model.

In these operations the hardening time of the impression material is of primary importance, which - depending on its type and any accelerators present - hardens in a time generally between about one and about seven minutes.

There are two main categories of impression materials: those with fast hardening times and those with long hardening times.

Both of them have drawbacks that make the above-mentioned impression-taking unsatisfactory in many ways.

Impression materials characterised by a fast hardening of a few minutes are typically the "alginates", which are derived from alginic acid, in turn derived from seaweed. Fast-hardening alginates can make it difficult for operators, who have little time to carefully place them on impression trays and to correctly place the trays in the mouth.

A poor insertion of the impression material on said trays, for example with the formation of air bubbles, makes the entire impression-taking operation useless. Equally, an inaccurate application of impression material in a quantitative sense leads to unacceptable results. This is particularly the case if said material is applied in insufficient quantity where a larger quantity is required.

If the staff then make adjustments to the position of the trays in the mouth, they will damage the outcome of the operation, since the impression material is already hardening.

In addition, fast-hardening materials give rise to impressions that, in any case, are not perfectly precise, because fast hardening hinders their complete penetration into all recesses of teeth and mucous membranes.

It should be considered that the preparation and placement time of the impression tray with fast-hardening impression material in the mouth takes up a significant amount of time: up to 50% of the hardening time. The use of these materials is, therefore, complex.

Impression materials with long-hardening times of several minutes, e.g. five to seven minutes, are typically made from silicone or other materials.

These materials allow an operator to position them well and with the utmost care on the impression trays, avoiding air bubbles and avoiding an irregular, locally deficient or excessive, or, in any case, unsuitable, distribution for the specific copies planned. When these impression materials are then inserted into the mouth, they are able to detect the shape of teeth and mucous membranes with great precision, because they can easily penetrate all the hollows, even small ones, before they harden.

Impression materials with long hardening times are widely used.

However, they have a fundamental disadvantage: patients have to wait a relatively long time with the impression material and impression tray in their mouth.

Since the same material and the tray too almost inevitably touch very sensitive regions such as tongue and palate, the patient very often perceives very unpleasant sensations within a few minutes.

For example, a sense of suffocation, increased salivation, retching, and, sometimes, induced vomiting.

In the case of vomiting, this results in the unpleasant necessity of re-doing all the operations from the start, after checking for and then carefully, and for a long time, removing any residues of the previous impression material left, for example, between the teeth.

In addition, if the operation is repeated, it is necessary to wait for the patient to fully recover from the previous unpleasant experience.

An attempt has already been made to remedy this situation, at least in part, by providing special trays for the impression material that are supplied with specific means to heat and accelerate the hardening of the impression material.

Typically, in these cases, the trays are connected to electrical resistors that are connected to an external energy source that is spaced apart.

Otherwise, hot liquids, taken and conveyed from an external source, are circulated in the trays. In some cases, microwaves or even laser light are conveyed and applied locally.

These complex trays are, in fact, rarely used, because they are not easy and quick to handle and because they are expensive and sometimes even dangerous for patients, who keep said trays in their mouths.

Complex trays are in fact available in a small number of shapes and sizes and can, therefore, only be used on limited occasions.

In this situation, the technical task underlying this invention is to devise a device for accelerating the hardening of material suitable for copying the shape of teeth and mucous membranes that is capable of substantially overcoming at least some of the above-mentioned drawbacks.

In the context of said technical task, an important purpose of the invention is to obtain a simple device adapted to quickly and optimally carrying out the teeth- and mucous membrane-copying operations.

Another important purpose of the invention is to create a device that does not require structural modifications of either the impression material or the impression trays normally used.

Last but not least, another purpose is to devise a device that is economical and immediately available, especially to dental practices.

The technical task and specified purposes are achieved with a device for accelerating the hardening of material suitable for copying the shape of teeth and mucous membranes as claimed in the appended claim 1.

Preferred technical embodiments are highlighted in the dependent claims.

The features and advantages of the invention are clarified by the following detailed description of preferred embodiments thereof, with reference to the drawings, wherein:
- **Fig. 1a** illustrates, in an exploded view, the components of the device according to the invention using an impression tray of the type intended for copying the palate, gums, and teeth of the upper dental arch in the upper jaw;
- **Fig. 1b** illustrates, in an exploded view, the analogous components in Figure 1a in the device according to the invention using an impression tray for copying the gums and teeth of the lower dental arch, in the lower jaw, the device being in a position that is inverted compared to the use position;
- **Fig. 2a** shows a final preparation step for the device using the impression tray in Figure 1a, performed immediately before the insertion of the same device in the mouth;
- **Fig. 2b** shows a final preparation step for the device using the impression tray in Figure 1b, performed immediately prior to its being inverted and inserted into the mouth, for copying the gums and teeth of the lower dental arch; and
- **Figs. 3a and 3b** show the devices in Figures 2a and 2b respectively in their basically complete configuration.

In this document, the measures, values, shapes and geometric references (such as perpendicularity and parallelism), when associated with words like "almost" or other similar terms such as "approximately" or "substantially", are to be understood as except for measurement errors or inaccuracies owing to production and/or manufacturing errors and, above all, except for a slight divergence from the value, measure, shape, or geometric reference with which it is associated. For example, if associated with a value, such terms preferably indicate a divergence of no more than 10% from the value itself.

Furthermore, when used, terms, such as "first", "second", "higher", "lower", "main", and "secondary" do not necessarily identify an order, relationship priority, or relative position, but they can simply be used to distinguish different components more clearly from one another.

Unless otherwise stated, the measurements and data reported in this text shall be considered as performed in International Standard Atmosphere ICAO (ISO 2533:1975).

With reference to the figures, the reference number 1 denotes the device as a whole according to the invention.

The device 1 is designed for copying impressions both of the mouth, the mucous membranes in general, and parts of the body in communication with the outside environment of which a precise model is wanted, for study purposes and/or medical or surgical operations.

The figures illustrate the preferred embodiment of the device 1, designed for dental practices, where it is often necessary to have an accurate model of the teeth and/or gums and/or palate.

The preferred embodiment for dental practices is illustrated with reference to two common variants used together or in succession in various cases: that for copying the upper portions of the mouth, in the upper jaw; and that for copying the lower portions of the mouth, in the lower jaw.

In both cases, an impression tray is used the shape of which can vary widely depending on the specific copying necessities, for example only partial or total.

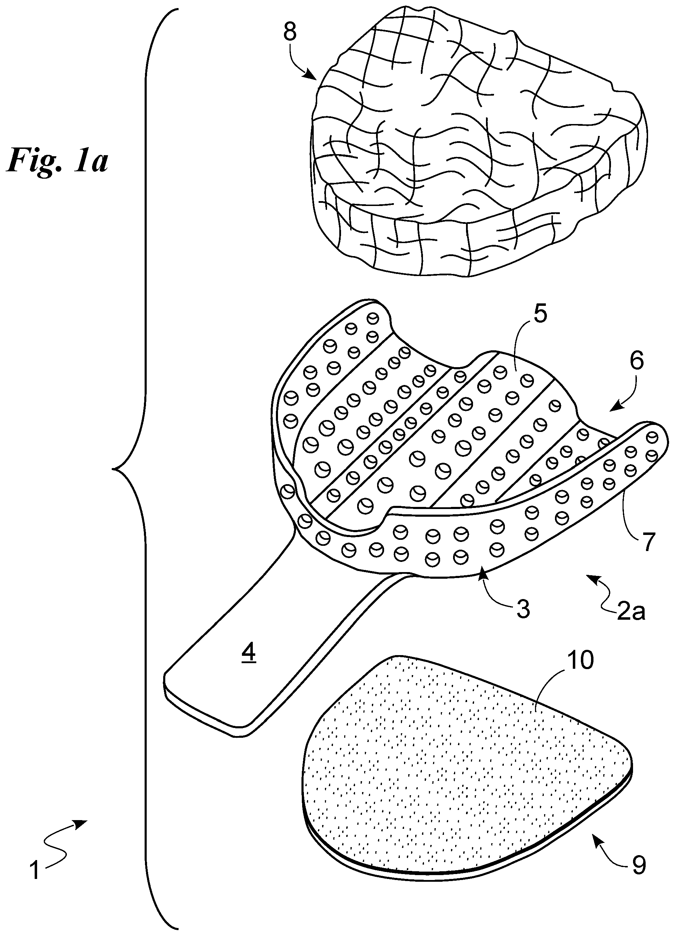

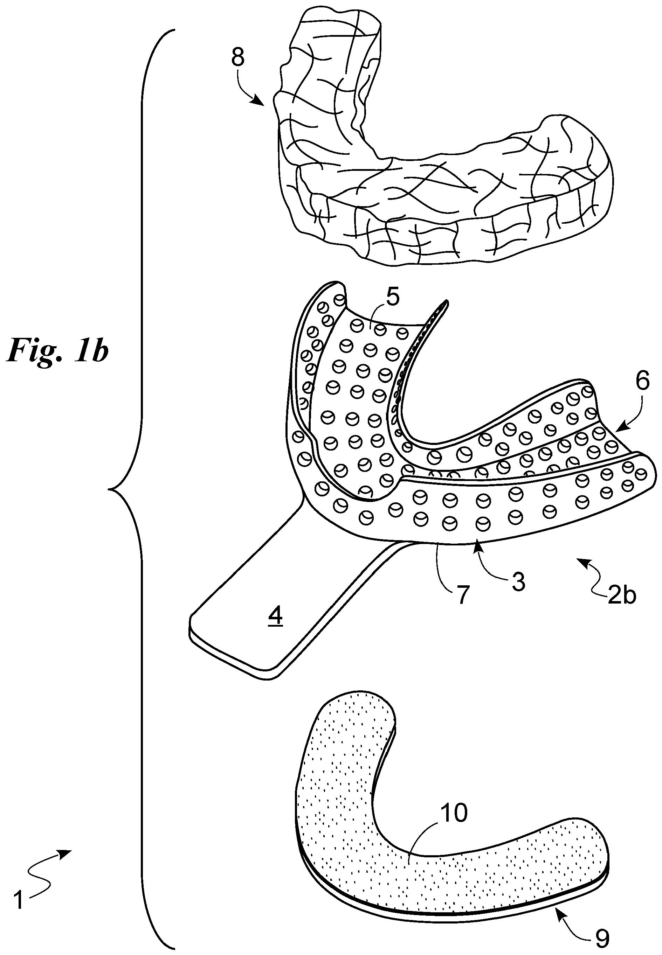

In Figs. 1a, 2a, 3a by way of an important example, an upper impression tray **2a** for the whole upper dental arch is included, and in Figs. 1b, 2b, 3b a lower impression tray **2b** for the whole lower dental arch is included.

These trays are generally stiff, made of metal or plastic, and can be re-used after being sterilised or they may be disposable.

In a known way, the impression tray 2a, 2b has a working portion **3** shaped like a tray, for example perforated, or continuous, and with an anatomical shape in part similar to the zone of the body to be copied, and a handle **4** for moving the whole device 1.

In particular, as shown in the figures, the working portion or tray 3 has a working face **5** defining at least one hollow **6** shaped like an open channel and designed to be positioned, selectively, at the upper dental arch, in the upper jaw, and in the lower dental arch, in the lower jaw.

The working portion or tray 3 has, in addition, a base face **7** opposite the working face 6 and, for example, which is basically flat.

On the working face 5 and, in particular, in the channel-shaped hollow 6, impression material **8,** known in itself, is inserted.

The impression material 8 initially has, having just been shaped or made available, a plastic consistency that is more or less viscose and that hardens slowly, typically within approximately one to seven minutes.

As already mentioned, generally speaking, two categories of impression material predominate on the market: those with fast hardening times and those with long hardening times.

Among these impression materials 8 those provided with spontaneous long hardening times are preferred. These enable the operator to do a careful job before inserting them in the mouth and are more accurate in copying the teeth, gums, and palate, or, in any case, the mucous membranes for which it is useful to have a model.

In fact, the impression materials 8 with spontaneous long hardening times, once inserted, for example in the mouth, are still fluid enough and capable of penetrating every point of the mouth itself.

They are, however, irritating for patients who have to wait a long time for them to completely harden, keeping them in the mouth or, in any case, applied, together with the corresponding impression trays, as already explained.

All the known impression materials 8, or at least the majority of them, also have the property of being heat-sensitive: in other words, they harden more quickly when the temperature is increased.

According to the invention, this property is first of all exploited to substantially increase the hardening speed of the impression materials 8 with long hardening times, after their preparation.

In fact, the invention comprises at least one heating plate 9 of the type that heats up due to exothermic chemical reactions that can be activated on command.

This heating plate 9 is advantageously engaged to the impression tray 2a, 2b so as to transmit heat to the impression material 8, which is heat-sensitive.

In dental use, the heating plate 9 is preferably, advantageously engaged to the base face 7 of the impression tray 2a, 2b and the latter, in practice, is placed between the heating plate 9 and the impression material 8.

Therefore, the heating plate 9 does not interfere with the impression material 8 and the heat is transmitted through the impression tray 2a, 2b.

This is not an obstacle since the impression tray 2a, 2b is generally perforated and, in many cases, metal, and therefore an excellent heat conductor.

The impression tray 2a, 2b is engaged via an adhesive **10** and the latter can be an adhesive that can be transferred, if the impression tray 2a, 2b is reused, once it has been cleaned and sterilised, or a permanent adhesive, in the case of a disposable tray 2a, 2b.

The heating plate 9 is preferably disposable and performs an irreversible exothermic chemical reaction.

The material of which the heating plate 9 is made is known in itself and is used to make laminar sheets or elements for hand warmers or foot warmers, in many cases disposable ones.

The disposable laminar elements for hand warmers or foot warmers are kept in airtight wrappings or pouches and just opening the wrappings, and exposing said laminar elements to air, activates the exothermic reaction.

Likewise, the heating plates 9 to be applied to the impression trays 2a, 2b shall be activated by extraction from their respective airtight wrappings or pouches.

As a guideline, the material of which each heating plate 9 is made includes iron powder, activated carbon, water and salt as the main components.

They are natural components that are not harmful for patients who come into contact with them, as with the laminar, disposable elements for hand warmers and foot warmers.

In addition, when the impressions of the upper dental arch and the lower are taken, preferably in succession, there is no contact between the patients and the heating plates 9.

Again in a known way for disposable laminar elements for hand warmers or foot warmers, the exothermic reaction can be activated immediately upon exposure to air, or, gradually, in the space of a few minutes.

Heating plates 9 made of materials that are activated by exothermic reactions immediately after extraction from their airtight wrappings are preferably used.

The temperatures obtained with the heating plates 9 can vary by approximately 40 degrees centigrade to approximately 60 degrees centigrade and last for amply sufficient time.

In the hand warmer and foot warmer elements, the heat may also last for hours, but for the specific use of heating the impression material 8, just a few minutes are needed.

The shape of the heating plates 9 can already be prepared, but it can also be adapted by hand, with a simple and easy cutting of disposable laminar elements for hand and foot warmers.

It should also be noted that, in various cases, the disposable laminar elements on the market are already equipped with an adhesive film, for applying to shoe soles, pockets, or gloves.

Dental office staff - in particular - can therefore apply heating plates 9 by gluing when they are already performing their exothermic reaction and the heat-sensitive impression material 8 is already prepared, then insert the device 1a, 1b into a patient's mouth, and, finally, extract the device after a very short time, with the heat-sensitive impression material 8 already hardened. This regardless of whether the heating plates 9 are still emanating heat or not.

Depending on the situation, more than one heating plate 9 can be applied to an impression tray, for example being overlapped or adjacent to each other.

The invention teaches a new method for accelerating the hardening of impression material 8 designed for copying the shape of teeth and mucous membranes, in particular using said impression tray 2a, 2b.

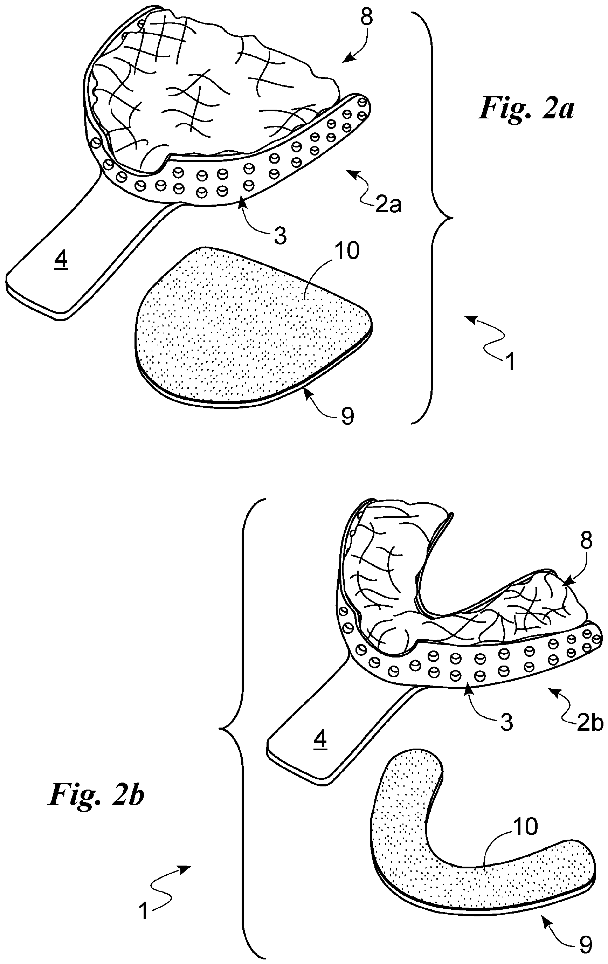

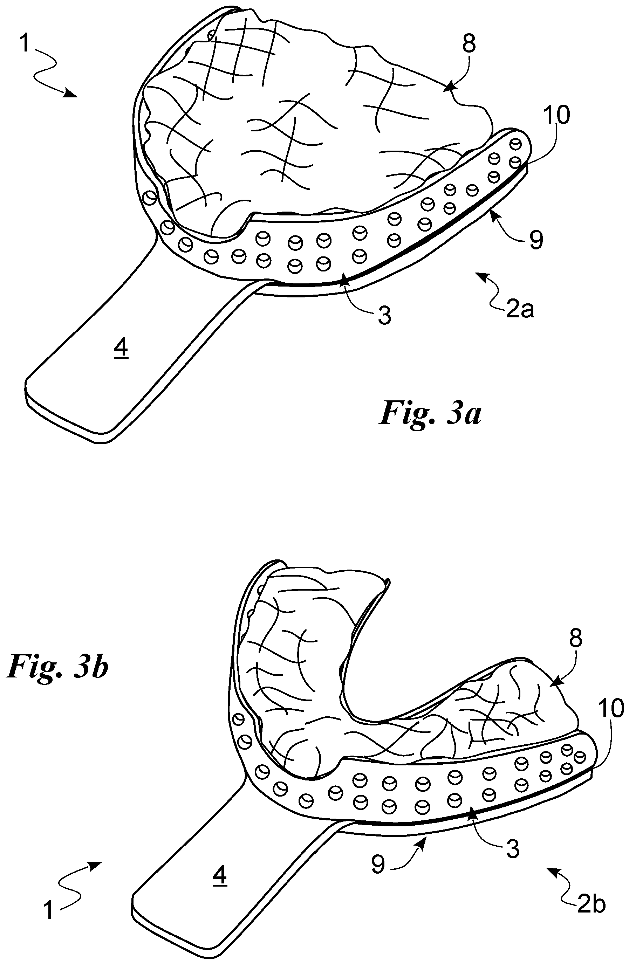

The method is basically illustrated in the sequence of Figs. 2a and 3a and Figs. 2b and 3b.

An initial preparation step, including the placement of heat-sensitive impression material 8 in at least one impression tray 2a or 2b or the like, and a last step, of placing the same on the teeth or gums, that are known in and of themselves are included.

After the initial preparation step and immediately before the last step, a final preparation step is provided wherein at least one heating plate 9 is engaged with the impression tray 2a or 2b or the like while the heating plate is starting an exothermic reaction.

The heating plate 9 is engaged in a separate position compared to the impression material 8, in particular it is engaged to the base face 7 of the impression tray 2a or 2b or the like.

The engagement is preferably performed by means of gluing with an adhesive material 10 that can be removed or is permanent.

The invention teaches a novel use of a heating plate 9 of the type used for hand warmers and foot warmers.

According to this new use, the heating plate 9 - or in any case a laminar element of a hand warmer or foot warmer that heats up - is applied to an impression tray 2a, 2b or the like to accelerate the hardening of the impression material 8 designed to copy the shape of teeth and mucous membranes and supported by the impression tray.

The invention achieves some important advantages.

In fact, it is possible to use a slow-hardening impression material 8, taking advantage of all its advantages and eliminating its drawbacks.

The advantages are the ability to insert the impression material 8 carefully and without hurrying into the impression tray, and to obtain very precise copies. This minimises the time the impression material and the tray remain in the patient's mouth.

This result is achieved by using the heating plate 9, which is only applied after the optimum positioning of the impression material 8 and which is only at the beginning of its activity when the material 8 is inserted into the mouth. Therefore, it does not hinder the penetration of the impression material, still fluid, into all the recesses to be copied.

Then the impression material quickly hardens under the impetus of the heat developed by the heating plate 9.

Variations may be made to the invention that fall within the scope of the inventive concept defined in the claims.

## Claims

1. A device for accelerating the hardening of impression material suitable for copying the shape of teeth and mucous membranes, comprising:
- at least one impression tray (2a, 2b), having at least one working portion (3) provided with a working face (5) defining at least one hollow (6) and with a base face (7) opposite to said working face (5),
- and heat-sensitive impression material (8) located at least in said hollow (6),
- **characterised in that** it comprises at least one heating plate (9) which heats up through an exothermic chemical reaction that can be activated on command,
- **and in that** said heating plate (9) is engaged with said tray so as to transfer heat to said impression material (8).

2. The device according to claim 1, wherein said at least one heating plate (9) is engaged with said base face (7), said at least one impression tray (2a, 2b) being interposed between said heating plate (9) and said impression material (8).

3. The device according to one or more preceding claims, providing an adhesive (10) suitable to engage said heating plate (9) with said impression tray (2a, 2b).

4. The device according to one or more preceding claims, wherein said heating plate (9) is made of a material of the type used for hand warmers and foot warmers.

5. The device according to one or more preceding claims, wherein said heating plate (9) is disposable and said exothermic chemical reaction is irreversible.

6. The device according to one or more preceding claims, wherein said heating plate (9) is activated by exposing it to the air and includes iron powder, activated carbon, water and salt.

7. A method for accelerating the hardening of impression material suitable for copying the shape of teeth and mucous membranes, comprising:
- a first initial preparation step including the placement of heat-sensitive impression material (8) into at least one impression tray;
- and a last step of placing said impression material (8) and said impression tray into contact with the teeth and the mucous membranes;
- **characterised in that,** after said initial preparation step and immediately before said last step, a final preparation step is provided wherein at least one heating plate (9) is engaged with said impression tray while said heating plate (9) is in the process of performing an exothermic reaction.

8. The method according to the preceding claim, wherein said at least one heating plate (9) is engaged with said impression tray in a separate position from said impression material (8).

9. The method according to one or more preceding claims, wherein said at least one heating plate (9) is engaged with said impression tray by gluing.

10. Use of a heating plate (9) of the type used for hand warmers and foot warmers which heats up through an exothermic chemical reaction that can be activated on command,
- **characterised in that** said heating plate (9) is applied to an impression tray to accelerate the hardening of impression material (8) housed in said tray.

## Patentansprüche

1. Vorrichtung zur Beschleunigung der Aushärtung von Material zum Kopieren der Form von Zähnen und Schleimhäuten, umfassend:
- mindestens einen Abdruckhalterbehälter (2a, 2b) mit mindestens einem mit einer Arbeitsfläche (5), die mindestens eine Vertiefung (6) und eine Grundfläche (7) gegenüber der genannten Arbeitsfläche (5) definiert, ausgestatteten Arbeitsabschnitt (3),
- und wärmeempfindliches Material zum Kopieren (8), das mindestens in der genannten Vertiefung (6) positioniert ist,
- **dadurch gekennzeichnet, dass** sie mindestens eine Wärmeplatte (9) umfasst, die sich durch auf Befehl aktivierbare, exotherme chemische Reaktion selbst erwärmt,
- **und dadurch, dass** die Wärmeplatte (9) sich an dem genannten Behälter auf eine Art und Weise im Eingriff befindet, die geeignet ist, Wärme an das genannte Material zum Kopieren (8) zu übertragen.

2. Vorrichtung nach Anspruch 1, bei der die genannte mindestens eine Wärmeplatte (9) sich an der genannten Grundfläche (7) im Eingriff befindet, wobei der genannte Abdruckhalterbehälter (2a, 2b) zwischen der genannten Wärmeplatte (9) und dem genannten Material zum Kopieren (8) eingefügt wird.

3. Vorrichtung nach einem oder mehreren der vorangegangenen Ansprüche, bei der ein Klebematerial (10) vorgesehen ist, das geeignet ist, die genannte Wärmeplatte (9) an dem genannten Abdruckhalterbehälter (2a, 2b) in Eingriff zu bringen.

4. Vorrichtung nach einem oder mehreren der vorangegangenen Ansprüche, bei der die genannte Wärmeplatte (9) aus Material des für Handwärmer- und Fußwärmerelemente verwendeten Typs besteht.

5. Vorrichtung nach einem oder mehreren der vorangegangenen Ansprüche, bei der die genannte Wärmeplatte (9) ein Einwegprodukt und bei der die genannte exothermische chemische Reaktion irreversibel ist.

6. Vorrichtung nach einem oder mehreren der vorangegangenen Ansprüche, bei der die genannte Wärmeplatte (9) aktiviert wird, indem sie Luft ausgesetzt wird, und Eisenpulver, Aktivkohle, Wasser und Salz enthält.

7. Verfahren zur Beschleunigung der Aushärtung von Material zum Kopieren der Form von Zähnen und Schleimhäuten, umfassend:
- einen anfänglichen Schritt der einleitenden Vorbereitung, der das Unterbringen des wärmeempfindlichen Materials zum Kopieren (8) in mindestens einem Abdruckhalterbehälter umfasst;
- und einen abschließenden Schritt des Unterbringens des genannten Materials zum Kopieren (8) und des genannten Abdruckhalterbehälters an Zähnen und Schleimhäuten;
- **dadurch gekennzeichnet, dass** nach dem genannten anfänglichen Schritt und unmittelbar vor dem genannten abschließenden Schritt ein Schritt der endgültigen Vorbereitung vorgesehen wird, bei dem mindestens eine Wärmeplatte (9) an dem genannten Abdruckhalterbehälter in Eingriff gebracht wird, während die genannte Wärmeplatte (9) sich in der Phase der Ausführung einer exothermen Reaktion befindet.

8. Verfahren nach dem vorangegangenen Anspruch, bei dem die genannte mindestens eine Wärmeplatte (9) an dem genannten Abdruckhalterbehälter im Verhältnis zu dem genannten Material zum Kopieren (8) in getrennter Position in Eingriff gebracht wird.

9. Verfahren nach einem oder mehreren der vorangegangenen Ansprüche, bei dem die genannte mindestens eine Wärmeplatte (9) an dem genannten Abdruckhalterbgehälter durch Verkleben in Eingriff gebracht wird.

10. Verwendung einer Wärmeplatte (9) des für Hände- und Fußwärmer verwendeten Typs, Wärmer, die mittels einer exothermen chemischen Reaktion, die auf Befehl aktiviert werden kann, erwärmt werden
- **dadurch gekennzeichnet, dass** die genannte Wärmeplatte (9) auf einen Abdruckhalterbehälter appliziert wird, um die Aushärtung von in dem genannten Behälter untergebrachtem Material zum Kopieren (8) zu beschleunigen.

## Revendications

1. Dispositif pour accélérer le durcissement de matériau d'empreinte approprié pour copier la forme des dents et des membranes muqueuses, comprenant :
- au moins un récipient porte-empreintes (2a, 2b), ayant au moins une partie de travail (3) dotée d'une face de travail (5) définissant au moins un creux (6) et d'une face de base (7) opposée à ladite face de travail (5),
- et du matériau d'empreinte (8) thermosensible placé au moins dans ledit creux (6),
- **caractérisé en ce qu'il** comprend au moins une plaque chauffante (9) s'autochauffant par réaction chimique exothermique qui peut être activée sur commande,
- **et en ce que** ladite plaque chauffante (9) est engagée audit récipient de manière à transmettre de la chaleur audit matériau d'empreinte (8).

2. Dispositif selon la revendication 1, où au moins une plaque chauffante (9) est engagée à ladite face de base (7), ledit au moins un récipient porte-empreintes (2a, 2b) s'interposant entre ladite plaque chauffante (9) et ledit matériau d'empreinte (8).

3. Dispositif selon une ou plusieurs des revendications précédentes, où un adhésif (10) est prévu pour engager ladite plaque chauffante (9) audit récipient porte-empreintes (2a, 2b).

4. Dispositif selon une ou plusieurs des revendications précédentes, où ladite plaque chauffante (9) est en matériau du type utilisé pour des éléments chauffe-mains et chauffe-pieds.

5. Dispositif selon une ou plusieurs des revendications précédentes, où ladite plaque chauffante (9) est à usage unique et où ladite réaction chimique exothermique est irréversible.

6. Dispositif selon une ou plusieurs des revendications précédentes, où ladite plaque chauffante (9) est activée par exposition de celle-ci à l'air et comprend de la poudre de fer, du charbon actif, de l'eau et du sel.

7. Procédé pour accélérer le durcissement de matériau d'empreinte approprié pour copier la forme des dents et des membranes muqueuses, comprenant :
- une phase initiale de préparation initiale comprenant la collocation de matériau d'empreinte (8) thermosensible dans au moins un récipient porte-empreintes ;
- et une phase finale de collocation desdits matériaux d'empreinte (8) et dudit récipient porte-empreintes en correspondance des dents et des membranes muqueuses ;
- **caractérisé en ce qu'**après ladite phase de préparation initiale et immédiatement avant ladite phase finale une phase de préparation finale est prévue où au moins une plaque chauffante (9) est engagée audit récipient porte-empreintes tandis que ladite plaque chauffante (9) est en phase d'exécution d'une réaction exothermique.

8. Procédé selon la revendication précédente, où ladite au moins une plaque chauffante (9) est engagée audit récipient porte-empreintes en position séparée par rapport audit matériau d'empreinte (8).

9. Procédé selon une ou plusieurs des revendications précédentes, où au moins une plaque chauffante (9) est engagée audit récipient porte-empreintes par collage.

10. Usage de plaque chauffante (9) du type utilisé pour des chauffe-mains et chauffe-pieds, des éléments chauffants qui se réchauffent à travers une réaction chimique exothermique qui peut être activée sur commande
- **caractérisé en ce que** ladite plaque chauffante (9) est appliquée à un récipient porte-empreintes pour accélérer le durcissement de matériel d'empreinte (8) logé dans ledit récipient.
